# EUROPEAN PATENT APPLICATION

(11) **EP 2 631 804 A1**
(43) Date of publication of application: **28.08.2013**
(21) Application number: 13155685.4
(22) Date of filing: 18.02.2013
(51) Int. Cl.: G06F 11/36, G06Q 10/10

(54) **A METHOD AND APPARATUS FOR DEBUGGING A PROGRAM OF A BUSINESS PROCESS**

(30) Priority: 27.02.2012 US 201213405902
(71) Applicant: Yokogawa Electric Corporation, Tokyo 180-8750 (JP)
(72) Inventor: Zhang, Ji Song Max, 469270 Singapore (SG); Lim, Sock Ly, 469270 Singapore (SG); RS, Muralee, 469270 Singapore (SG)
(74) Representative: Henkel, Breuer & Partner

(57) **Abstract**

A method and apparatus for debugging a program of a business process, the method comprising: displaying a flowchart of the process on a display, said displaying being enabled by one or more plug-ins; enabling setting of a debugging breakpoint in the displayed flowchart of the process of the program; operating a simulator for creating a simulated runtime environment for executing the program as if the program is operating in actual application; executing the program using the simulator; continuously communicating status of the executing program from the simulator to one of the plug-ins; determining at one of the plug-ins whether the status of the executing program has reached the breakpoint set in the displayed flowchart of the process of the program; and suspending execution of the program when the plug-in determines that the status of the executing program has reached the breakpoint set in the displayed flowchart of the process of the program.

## Description

### FIELD OF THE INVENTION

The present invention relates to a method and apparatus for debugging a program of a business process.

### BACKGROUND

In an electronic workflow management system, a workflow can be defined as a sequence of concatenated steps to carry out predefined tasks or activities. A workflow can depict a sequence of electronic operations, declared as work of a person, a group of persons, an organization of staff, or one or more simple or complex mechanisms. A typical representation of a workflow is by way of flowcharts.

A workflow may include numerous interconnected processes and each process includes one or more methods of carrying out certain tasks or activities. Examples of workflow are business processes such as those carried out electronically for the operation of credit card validation, credit card purchases, accounting procedures, equity/bond transactions, insurance handling and the like.

Existing software for implementing such business processes may include a graphical user interface (GUI) for creating flowchart representations of the business processes. The flowchart creation principles could be based on known business process representation standards such as Business Process Modeling Notation (BPMN) managed by Object Management Group (OMG), Inc. and Business Process Execution Language (BPEL), short for *Web Services Business Process Execution Language* (WS-BPEL), an OASIS standard executable language for specifying actions within business processes with web services. OASIS stands for "Organization for the Advancement of Structured Information Standards", a global consortium that drives the development, convergence, and adoption of e-business and web service standards.

The software may be integrated with a software development platform to allow the business processes to be linked to the source code required for executing the processes. Such software development platform typically has a debugging interface operating at a low level of abstraction of the process e.g. at source code level. The debugging interface is usually unique to the software product (i.e. different software products have different debugging interface), contains many details and requires programming expertise to comprehend and use. Debugging performed using the debugging interface can be difficult and tedious.

### SUMMARY

In accordance with one aspect of the present invention, there is provided a method for debugging a program of a business process, the method comprising: displaying a flowchart of the process on a display, said displaying being enabled by one or more plug-ins; enabling setting of a debugging breakpoint in the displayed flowchart of the process of the program; operating a simulator for creating a simulated runtime environment for executing the program as if the program is operating in actual application; executing the program using the simulator; continuously communicating status of the executing program from the simulator to one of the plug-ins; determining at one of the plug-ins whether the status of the executing program has reached the breakpoint set in the displayed flowchart of the process of the program; and suspending execution of the program when the plug-in determines that the status of the executing program has reached the breakpoint set in the displayed flowchart of the process of the program.

The method may further comprise displaying a breakpoint indicator on the display for indicating location of the set breakpoint in the flowchart.

The method may further comprise displaying a status indicator on the display for indicating the status of the program.

The method may further comprise displaying an indicator on the display for indicating that a task or activity in the process of the program is not executing.

The method may further comprise displaying an indicator on the display for indicating that the program has stopped execution.

The method may further comprise displaying a watch window on the display for indicating variable values of the program during debugging.

The displayed flowchart may be represented based on Business Process Modeling Notation standards.

The displayed flowchart may be created based on Business Process Execution Language standards.

The program may be executed under Microsoft Workflow runtime environment.

The step of stopping execution of the program when the status of the executing program has reached the breakpoint set in the displayed flowchart of the process of the program may be performed by a debug engine for Microsoft Workflow.

In accordance with another aspect of the present invention, there is provided an apparatus for debugging a program of a process, the apparatus comprising: one or more plug-ins; a display for displaying a flowchart of the process, said displaying being enabled by one of the plug-ins; a simulator for creating a simulated runtime environment for executing the program as if the program is operating in actual application; a processing unit configured for enabling setting of a debugging breakpoint in the displayed flowchart of the process of the program; executing the program using the simulator; continuously communicating status of the executing program from the simulator to the plug-in; determining at one of the plug-ins whether the status of the executing program has reached the breakpoint set in the displayed flowchart of the process of the program; and stopping execution of the program when the plug-in determines that the status of the executing program has reached the breakpoint set in the displayed flowchart of the process of the program.

The processing unit may be further configured for displaying a breakpoint indicator on the display for indicating location of the set breakpoint in the flowchart.

The processing unit may be further configured for displaying a status indicator on the display for indicating the status of the program.

The processing unit may be further configured for displaying an indicator on the display for indicating that a task or activity in the process of the program is not executing.

The processing unit may be further configured for displaying an indicator on the display for indicating that the program has stopped execution.

The processing unit may be further configured for displaying a watch window on the display for indicating variable values of the program during debugging.

The displayed flowchart may be represented based on Business Process Modeling Notation standards.

The displayed flowchart may be created based on Business Process Execution Language standards.

The program may be executed under Microsoft Workflow runtime environment.

A debug engine for Microsoft Workflow may be used to perform the step of stopping execution of the program when the status of the executing program has reached the breakpoint set in the displayed flowchart of the process of the program.

The simulator may comprise a debug engine for suspending or terminating the program executed under the simulated runtime environment, wherein one of the plug-ins is a debugger plug-in for relaying a message from the plug-in enabling said displaying to the debug engine to instruct the debug engine to suspend or terminate the program.

The simulator may comprise a runtime engine for providing status of the program to the debug engine and the debug engine in turn provides the status of the program to the plug-in enabling said displaying though the debugger plug-in.

The debugger plug-in may be configured for determining that the status of the executing program has reached the breakpoint set in the displayed flowchart of the process of the program.

The plug-in enabling said displaying may be configured for determining that the status of the executing program has reached the breakpoint set in the displayed flowchart of the process of the program.

### BRIEF DESCRIPTION OF THE DRAWINGS

Embodiments of the invention will be better understood and readily apparent to one of ordinary skill in the art from the following written description, by way of example only and in conjunction with the drawings, in which:
Figure 1 is a diagram illustrating components of an apparatus.
Figure 2 is a flowchart illustrating a debugging process carried out by the apparatus.
Figure 3 is a flowchart representing a process created in a graphical user interface.
Figure 4 is a diagram illustrating a feature in the graphical user interface for debugging.
Figure 5 is a diagram illustrating steps taken by the apparatus for debugging.
Figure 6 is a diagram illustrating features in the graphical user interface during debugging.
Figure 7 is a diagram illustrating steps taken by the apparatus to detect debugging.
Figure 8 is a diagram illustrating features in the graphical user interface during debugging.
Figure 9 is a diagram illustrating steps taken by the apparatus during debugging.
Figure 10 is a diagram illustrating features in the graphical user interface during debugging.
Figure 11 is a diagram illustrating steps taken by the apparatus during debugging.
Figure 12 is a diagram illustrating features in the graphical user interface when a program has completed executing.
Figure 13 is a diagram illustrating steps taken by the apparatus to stop debugging.
Figure 14 is a diagram illustrating architecture of the apparatus.

### DETAILED DESCRIPTION

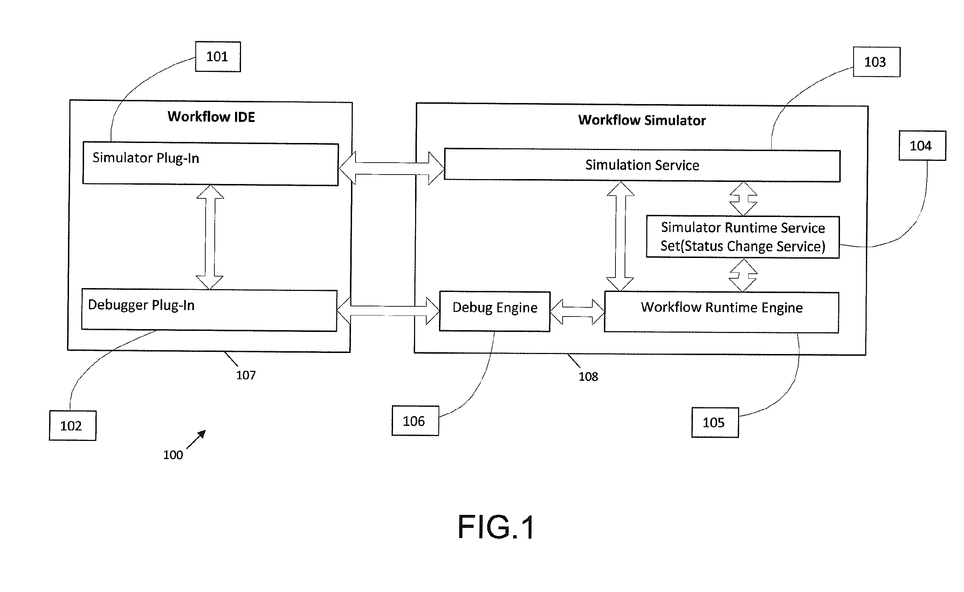

Figure 1 illustrates various components of an apparatus 100 for debugging a program of a business process. The components of the apparatus are namely an Integrated Development Environment (IDE) 107 and a simulator 108. Under the IDE 107, there are two plug-ins, namely a simulator plug-in 101 and a debugger plug-in 102. A plug-in is a set of software components that adds specific abilities to a larger software application. Under the Simulator 108, there are four components, namely a simulation service 103, a simulator runtime service set 104, a workflow runtime engine 105 and a debug engine 106.

It is appreciated that the words execute, load and run are used interchangeably in the present description.

The IDE 107 is a software application providing facilities for software development (e.g. Microsoft Visual Studio IDE). In the present example, the IDE 107 is an IDE developed based on Windows Workflow Foundation and thus it could be named as "Workflow IDE". For information, Windows Workflow Foundation (WF) is a Microsoft technology that provides an API (Application Programming Interface), an in-process workflow engine, and a rehostable designer to implement long-running processes as workflows within .NET applications.

In the present example, the simulator 108 is a software application for simulating a runtime environment that is required for executing a program of a process as if the program is operating in actual application (or in other words, real life or real world application). Simulation is required during software development and for debugging a program. Similarly, in the present example, the simulator 108 is developed based on Windows Workflow Foundation and thus it could be named as "Workflow Simulator".

The Simulator Plug-In 101 is a component configured to visualize statuses received from the simulator 108 in a Graphical User Interface (GUI) of the IDE 107. The simulator could be said to be responsible for enabling displaying. The GUI can be displayed in a display such as a computer monitor, a television display, and the like. The simulator plug-in 101 may also receive statuses relating to software debugging from the debugger plug-in 102 for visualising. The statuses are communicated in the form of status change messages.

Furthermore, the simulator plug-in 101 is configured to determine how the GUI is to be displayed on the display and controlled by a user, and store data or relay messages relating to changes to the GUI. For instance, when a user activates an action to take place from the GUI, the simulator plug-in 101 will be responsible for relaying a message indicative of the activation to respective components of the apparatus 100 that are required to be activated for the action to take place.

For example, when a program of a business process is being simulated by the simulator 108 and status change messages relating to the program executed are received by the simulator plug-in 101 from the simulator 108, the simulator plug-in 101 would visualize the changed statuses of the business process in the GUI. A user viewing the GUI on the display will be able to see graphics/text relating to the status change.

Furthermore, while in the present example, the debugger plug-in 102 and the debug engine 106 communicates at source code level, the simulator plug-in 101 communicates with the simulator 108 at a higher level of abstraction than source code level. This means that "high level" instructions such as 'Load a business process', 'Start simulation' and 'Terminate simulation' that could be activated from the GUI could be communicated between the simulator plug-in 101 and the simulator 108 to, for instance, request the simulator 108 to perform tasks or activities requested by a user providing the "high level" instructions through the GUI. For the present example, source code level refers to a level where software messages are communicated via a low level programming language such as assembly language, and including any programming language that is more specific to any particular software or hardware architecture (e.g. the programming language specifically used for software development using Windows Workflow Foundation) than the instructions that could be provided by the GUI.

The debugger plug-in 102 is configured for responding to a debugging action set by a user through the GUI. The debugger plug-in 102 can be said to be a first debugging tool. Examples of debugging actions include familiar debugging commands such as 'Set a breakpoint', 'Step into a subsequent procedure', 'Step out of a procedure', 'Watch or Monitor a specific variable', 'Continue debugging' and others. The debugger plug-in 102 is configured to relay debugging messages from the simulator plug-in 101 to the debug engine 106 in a format interpretable by the debug engine 106 so that the debug engine can carry out the action(s) associated with the debugging messages. The debugger plug-in 102 is also configured to receive debugging messages from the debug engine 106 and to carry out the action(s) associated with the debugging messages. An example of a debugging message from the debug engine 106 to the debugger plug-in 102 is the value of a monitored variable requested when the debugged program is suspended. An example of a debugging message from the debugger plug-in 102 to the debug engine 106 is 'suspend program execution'. It is appreciated that mention of suspension of the program in the present description is equivalent to mention of suspension of the business process. It is further appreciated that stopping the program includes suspending the program when a breakpoint is reached and terminating the program when the program has completed execution. Simulation service 103 is a component configured to receive messages from the simulator plug-in 101 and to carry out the actions associated with those messages. The messages may include requests to the Workflow Runtime Engine 105 to load a program of a business process, or to start or stop running a business process. The simulation service 103 may also receive status change messages from the simulation runtime service set 104 and deliver them to the simulator plug-in 101 in a format interpretable by the simulator plug-in 101 for the simulator plug-in 101 to carry out the actions associated with the status change messages.

Simulation runtime service set (or Status change service) 104 is a series of runtime services i.e. software applications for simulating a target runtime environment. Before a program of a business process can be loaded or executed, the Workflow Runtime Engine 105 will have to preload all runtime services. During simulation, the simulation runtime service set 104 continues to monitor the statuses of each task or activity in the process of the loaded program. For example, in a status change of a program from 'Not Executed' to 'Pre-executing' and then to 'Executing', it would require two separate status change messages to be sent to the simulation service 103 at the point of each status change. On receiving each of the two status change messages, the simulation service 103 forwards the received status change message to the simulator plug-in 101 for visualising the respective status change, if applicable.

Workflow Runtime Engine 105 is used to schedule and execute workflows and activities or tasks. In the present example, the word 'Workflow' in Workflow Runtime Engine 105 is present to indicate that the runtime engine operates based on Windows Workflow Foundation. It is appreciated that other runtime engines can also be used.

The debug engine (DE) 106 works with an interpreter or an operating system to provide debugging services such as execution control, breakpoint handling, and programming expression evaluation. The DE 106 can be said to be a second debugging tool. The DE 106 is responsible for monitoring the state of a program being debugged, using whatever means available to it in the supported runtime environment, including direct support from the Central Processing Unit (CPU) processing the DE 106 or direct support from APIs supplied by the runtime environment. For example, the .Net Common Language Runtime (CLR) supplies mechanisms to monitor a running program through ICorDebugXXX interfaces. A DE 106 supporting the CLR uses the appropriate ICorDebugXXX interfaces to keep track of a managed code program being debugged and then communicates any change of state to a session debug manager (SDM) (which forwards such information on to the Visual Studio IDE).

Furthermore, in the present example, the debugger plug-in 102 is linked up for direct communication with the debug engine 102. Through this direct communication link, the debugger plug-in 102 can send messages/commands to the debug engine 106 to ask it to perform something, instance, suspend the program running when a breakpoint is reached at a location in a flowchart displayed by the GUI on the display. Vice versa, the debug engine 106 can also send "source code level break point hit" message from during a process simulated by the simulator to the debugger plug-in 102, which in turn can communicate with the simulator plug-in 101 to get the simulator plug-in 101 to arrange for the GUI to display anything related to the "source code level break point hit" on the display.

In the present example, the DE 106 is responsible for tasks such as suspending an executing process of a program during debugging, stopping an executing process of a program to stop debugging and providing values of monitored variables to the debugger plug-in 102 during debugging. Furthermore, the DE 106 is a debug engine for Microsoft Workflow.

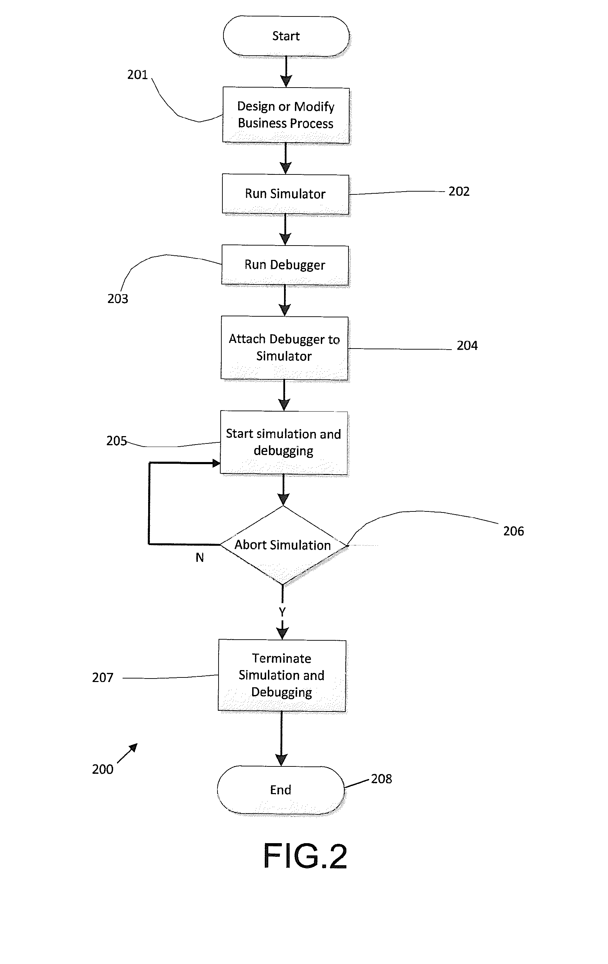

Figure 2 illustrates a method 200 for debugging a program of a business process using the apparatus 100 of Figure 1.

At step 201, a flowchart representing a business process is created or designed by a user using the GUI of the IDE 107 in Figure 1. The GUI is configured to allow creation of the flowchart based on Business Process Modeling Notation (BPMN) standards. It is appreciated that creation of the displayed flowchart may also include application of Business Process Execution Language (BPEL) standards. The flowchart is created on an electronic canvas or a virtual workspace of the GUI.

With regard to source code level debugging, there are existing debug engines that provide features to notify a debugger (or a debugger plug-in in this case) which line of code is hit when a debugging break point is found. In the example described with reference to Figures 1 and 2, there is provided two ways of setting break points for debugging the program of a business process. One way is to set a source code level break point, which is similar to what other software development tools provide. That is, the breakpoint is set on a GUI displaying detailed source code of the program. On the other hand, the other way is to set a break point on an electronic canvas or a virtual workspace comprising a flowchart of a business process. It is noted this way of setting a break point is currently not supported by existing debug engines. The electronic canvas advantageously contains a "high level view" of the business process that is easily understood by people.

Changes to current software development tools have to be made, that is by including a plug-in (e.g. simulator plug-in 101), to enable setting of a break point on the electronic canvas or virtual workspace comprising a flowchart of a business process and to enable a program of the flowchart to suspend upon execution until the breakpoint set in the flowchart. The method to achieve that comprises the steps of a method for debugging a program of a business process, the method comprising: displaying a flowchart of the process on a display, said displaying being enabled by one or more plug-ins (e.g. the simulator plug-in 101 in Figure 1); enabling setting of a debugging breakpoint in the displayed flowchart of the process of the program; operating a simulator (e.g. 108 in Figure 1) for creating a simulated runtime environment for executing the program as if the program is operating in actual application; executing the program using the simulator (e.g. 108 in Figure 1); continuously communicating status of the executing program from the simulator (e.g. 108 in Figure 1) to one of the plug-ins (e.g. the simulator plug-in 101 in Figure 1 or the debugger plug-in 102 in Figure 1); determining at one of the plug-ins (e.g. the simulator plug-in 101 in Figure 1 or the debugger plug-in 102 in Figure 1) whether the status of the executing program has reached the breakpoint set in the displayed flowchart of the process of the program; and suspending execution of the program when the plug-in (e.g. the simulator plug-in 101 in Figure 1 or the debugger plug-in 102 in Figure 1) determines that the status of the executing program has reached the breakpoint set in the displayed flowchart of the process of the program.

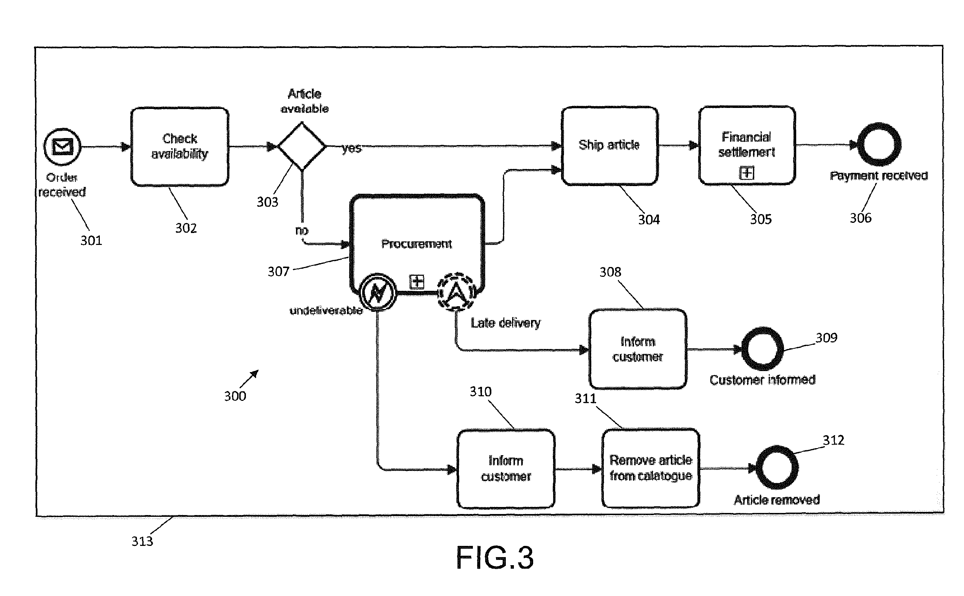

A screenshot of a flowchart 300 created in the canvas 313 of the GUI is illustrated in Figure 3. The flowchart 300 created relates to a business process for order fulfilment and procurement of an article. It is appreciated that other types of business processes, including industrial processes and the like, can also be created in the canvas of the GUI. Advantageously, the GUI supports debugging of the program of the business process under the view of the flowchart 300 in the canvas 313. The steps of the flowchart 300 are as follows.

At step 301, a customer makes selection to purchase an article from an electronic catalogue and an order to purchase the article is received by a seller of the article. The order includes a mailing address for the item to be delivered to.

At step 302, availability of the article for purchase is checked. The number of articles available is obtained at this step. Various criteria could be set to calculate whether an article is available.

At step 303, a decision is made based on the number of articles available obtained at step 302.

If the article is determined to be available at step 303, step 304 is carried out to electronically alert (e.g. via email) the relevant contacts (e.g. Automated delivery services for articles that could be purchased electronically, or any personnel in charge of delivery) to ship or deliver the article to the mailing address indicated in the order.

After alerting the relevant contacts to ship or deliver the article at step 304, payment (i.e. financial settlement) for the purchase of the article commences at step 305. Procedures for processing electronic payment may be carried out at step 305.

Upon successful receipt of the payment at step 305, procedures to be undertaken upon receipt of the payment are carried out at step 306. For example, informing the person making the order or the seller of the article that payment is received.

If the article is determined to be unavailable at step 303, step 307 is carried out to electronically alert (e.g. via email) the relevant contacts (e.g. Procurement personal or an automated purchasing unit in the case of articles that could be transacted electronically) to procure the article.

If it is determined at step 307 that the article is undeliverable for some reason, the person or customer making the order would be informed, for instance, electronically via email, that the article cannot be delivered to him/her at step 310.

At step 311, the article being ordered is being removed from the catalogue from which the article was selected at step 301.

Upon completion of the removal of the article from the catalogue, procedures to be undertaken upon removal of the article at step 311 are carried out at step 312. Examples of such procedures are updating a database to indicate that the number of articles remaining in stock is zero, or emailing the seller to inform that the article has been removed from the catalogue.

If it is determined at step 307 that the article will be delivered later than a predetermined time period, a message indicating late delivery of the article would be delivered electronically to the customer at step 308.

Upon receipt of the message indicating late delivery of the article, procedures to be undertaken upon receiving the message at step 308 are carried out at step 309. An example of such procedures is delivering a message to inform the seller that the message indicating late delivery has been sent to the customer.

The GUI can be configured such that each step in the flowchart 300 is selectable by a user to reveal detailed process steps for carrying out the selected step. It is appreciated that the flowchart 300 is a "high level view" of the business process. Many details such as the source code or other process information have been omitted in the flowchart 300. By enabling debugging to be performed in the view of the flowchart 300, software development time can be shortened. The debugging user interface is more user-friendly. Less technically trained personnel can also troubleshoot the program as the "high level view" of the business process is much easier to understand and debug.

With reference to Figure 2, after step 201, the simulator 108 in Figure 1 is activated to run at step 202. After the simulator 108 in Figure 1 is activated, a simulated runtime environment is created for the program of the process represented by the flowchart 300 in Figure 3 to execute as if it is operating in actual application.

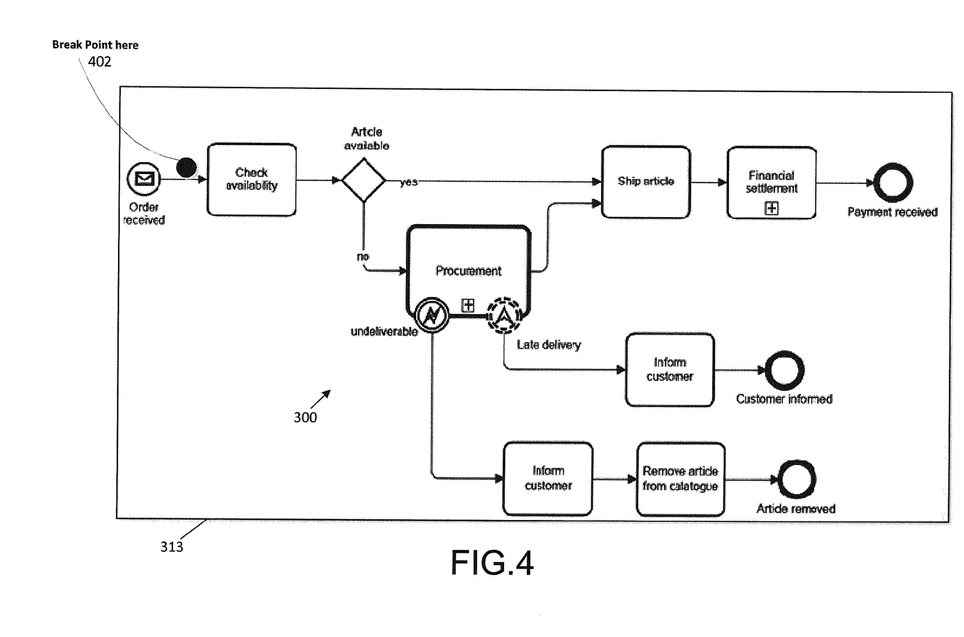

Figure 4 shows the flowchart 300 in Figure 3 that is created in the canvas 313 in Figure 3 at step 201 in Figure 2.

The GUI of the IDE 107 in Figure 1 is configured such that one or more debugging breakpoints can be set in the canvas 313 before or after execution of each task or activity in the flowchart 300. For the present example, each step of steps 301 to 312 in the flowchart 300 in Figure 3 is defined as a task or activity. It is appreciated that task and activity may be defined according to Business Process Modeling Notation (BPMN) standards.

In Figure 4, a debugging breakpoint 402 is set at a location before the task "Check availability" or step 302 in Figure 3 of the flowchart 300 is carried out. The simulator plug-in 101 in Figure 1 is configured to store data relating to the location of the breakpoint 402. In this case, the breakpoint 402 that is set in Figure 4 is represented by a shaded circle.

With reference to Figure 2, after the simulator 108 in Figure 1 is activated, the debugger plug-in 102 in Figure 1 is activated to run at step 203.

At step 204, the debugger plug-in 102 in Figure 1 is attached to the debug engine 106 in Figure 1 of the simulator 108 in Figure 1. This attachment enables communication to take place between the debugger plug-in 102 in Figure 1 and the debug engine 106 in Figure 1. Messages exchanged between the debugger plug-in 102 in Figure 1 and the debug engine 106 in Figure 1 relate to debugging of the program of the process represented by the flowchart 300 in Figure 3.

At step 205, simulation to run the program of the process represented by the flowchart 300 in Figure 3 as if it is operating in a actual application and debugging of the program are started.

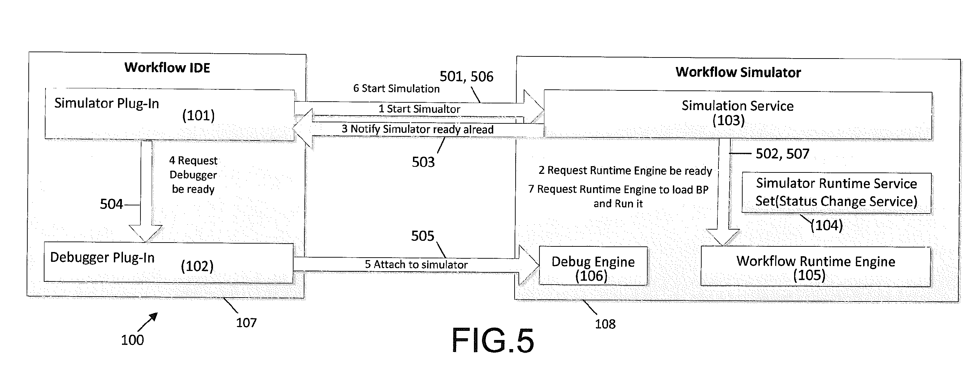

Interaction between the components of the apparatus 100 in Figure 1 during steps 202, 203, 204 and 205 of Figure 2 are illustrated in Figure 5.

Using the GUI of the IDE 107 in Figure 1, a user activates the simulator 108 in Figure 1 through an activation mechanism available in the GUI. The simulator plug-in 101 receives the signal from the mechanism and, at step 501, sends a message to start the simulator to the simulator service 103 component of the apparatus 100.

At step 502, the simulation service 103 requests the Workflow runtime engine 105 to get ready for running the simulated runtime environment that would be required for simulating the running of the program of the process represented by the flowchart 300 in Figure 3 as if it is operating in a actual application. At this step, the Workflow runtime engine 105 performs the necessary initiation procedures in preparation for the simulation of the actual operation of the program of the process represented by the flowchart 300 in Figure 3 that is debugged to run.

At step 503, the simulation service 103 notifies the simulator plug-in 101 that the simulator 108 is ready to run.

At step 504, the simulator plug-in 101 requests the debugger plug-in 102 to get ready for debugging.

At step 505, the debugger plug-in 102 attaches itself to the simulator to enable communication relating to debugging of the program to take place between the debugger plug-in 102 and the debug engine 106.

At step 506, the simulator plug-in 101 requests the simulation service 103 to start simulation.

At step 507, on receiving the request from the simulator plug-in 101, the simulation service 103 requests the Workflow runtime engine 105 to load or run the process, more specifically, for the present example, the business process (BP) of the program being debugged. Once the program is loaded, the simulation starts.

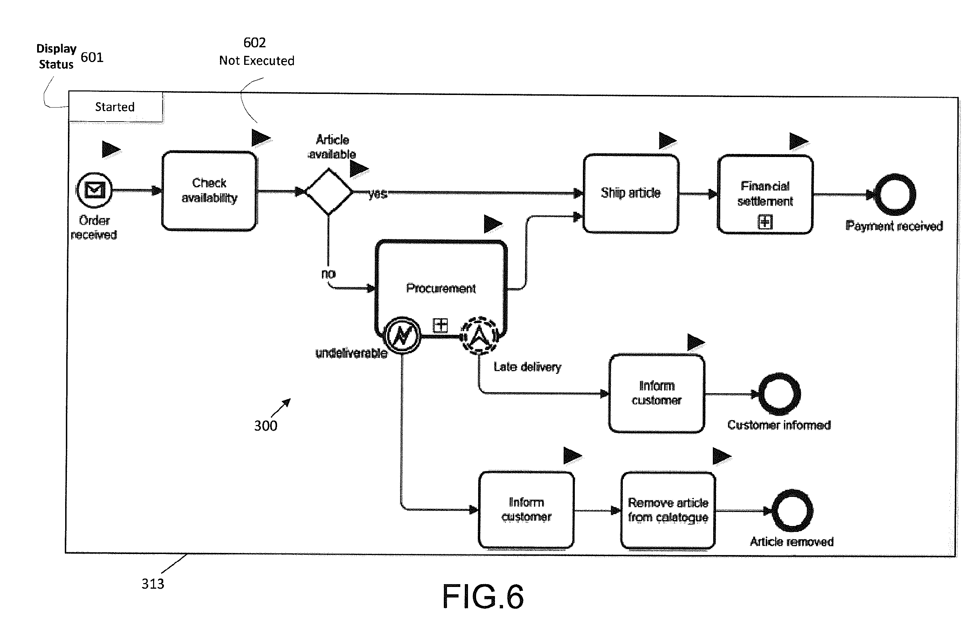

Figure 6 shows the canvas 313 of the GUI containing the flowchart 300 after the simulation and debugging starts i.e. after step 507 in Figure 5 and step 205 in Figure 2.

In Figure 6, there is a status display 601 indicating that the simulator and debugging has started. There are also present numerous activation mechanisms, e.g. 602 in Figure 6, in the form of "play" buttons. Each "play" button is located adjacent to each task or activity in the flowchart 300. The presence of a "play" button adjacent to a task or activity is an indication that the task or activity has not been executed yet. On top of indicating that a task or activity is not executed yet, each "play" button could be configured to be activated only upon selection by a user. In this case, activation of a "play" button would execute the task or activity the "play" button is located adjacent to.

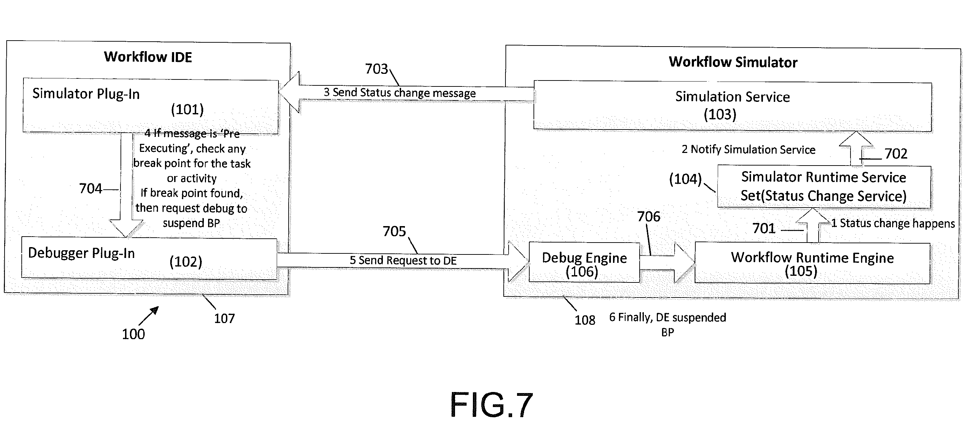

Figure 7 illustrates the steps carried out during debugging of the program of the process represented by the flowchart 300 in Figure 3.

At step 701, as the program is executing in the simulated runtime environment, the Workflow runtime engine 105 continuously reports or communicates changes in the status of the executed program to the simulator runtime service set 104. The status of the program changes when a task or activity is starting to execute in the process of the program or when a predefined event occurs. A predefined event may be configured to include, for example, the instance when the program has ended execution, the instance when a task or activity has ended execution, the instance when a task or activity is being executed to a prespecified point or the instance when an error in the program appears.

At step 702, on receiving the status change report from the Workflow runtime engine 105, the simulator runtime service set 104 notifies the simulation service 103 about the status change.

At step 703, on receiving the status change notification from the simulator runtime service set 104, the simulation service 103 sends a status change message to the simulator plug-in 101.

At step 704, on receiving the status change message from the simulation service 103, the simulator plug-in 101 checks whether the status change message is one that is 'pre-executing', which means that a task or activity in the flowchart 300 is just starting to execute.

If the message is found to be 'pre-executing' that is the program has run to a point which is just before a task or activity (e.g. 302 in Figure 3) in the flowchart 300, a check is performed to see if there is any breakpoint (e.g. 402 in Figure 4) being set at the location in the canvas 313 in Figure 3 just before the task or activity.

If a breakpoint is found to be set by a user at the location in the canvas 313 in Figure 3 just before the task or activity, the simulator plug-in 101 will request the debugger plug-in 102 to suspend the business process (BP) of the program that is running.

At step 705, on receiving the request from the simulator plug-in 101, the debugger plug-in 102 sends a request to the debug engine 106 to instruct it to suspend the business process (BP) of the program at the breakpoint (i.e. relaying the message from the simulator plug-in 101 to the debug engine 106).

At step 706, the debug engine 106 instructs the Workflow runtime engine 105 to suspend the business process of the program at the breakpoint.

In the present example, the simulator plug-in 101 will not take any action if the message is found to be 'executing'. To be 'executing' means that the program is executing in an interval between when execution of a task or activity in the flowchart 300 has started to when execution of the task or activity has ended.

It is appreciated that steps 701, 702, 703 and 704 are essentially steps for monitoring the status of the program. Any changes to the status are reported and checked to see if any particular action is required based on the status change.

In an alternate implementation, the status change reporting at step 701 may be continuously reported to the debug engine 106 instead of the simulator runtime service set 104. On receiving a status change report from the Workflow runtime engine 105, the debug engine 106 would send a status change message to the debugger plug-in 102. Thereafter, the debugger plug-in 102 would carry out the check performed on the status change message at step 704. It is appreciated that it could be configured such that the debugger plug-in 102 forwards the status change message to the simulator plug-in 101 to perform the check of step 704 instead.

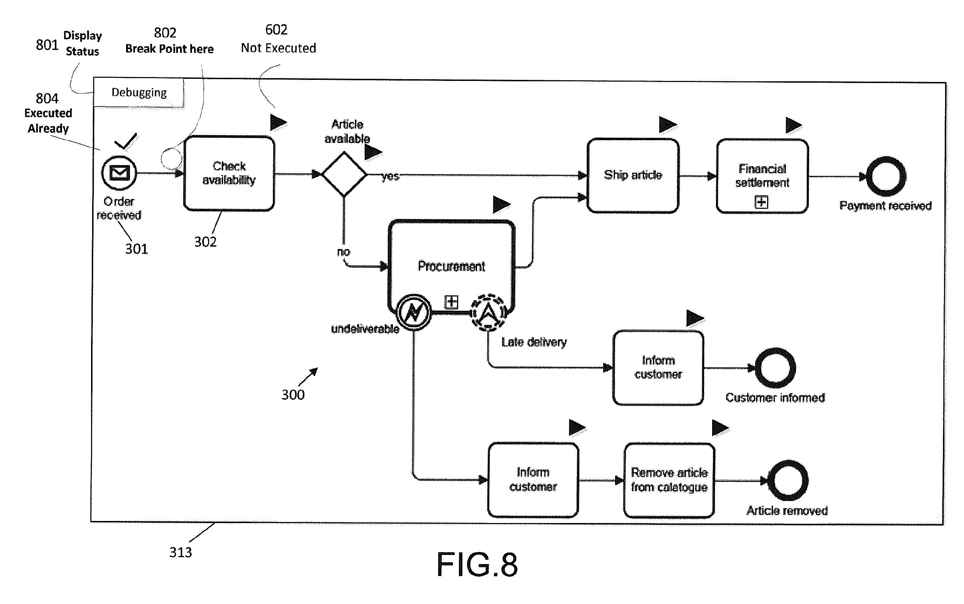

Figure 8 shows a screenshot of the canvas 313 of the GUI containing the flowchart 300 after step 706 in Figure 7 in the case where a breakpoint (i.e. 402 in Figure 4) is found before task "Check availability" or step 302 in Figure 3 and the business process of the program has been suspended.

In Figure 8, there is a status display 801 indicating that the program is debugging. There is an "executed" indication 804 in the form of a "tick" located adjacent to the graphics representing the step 301 in Figure 3. This indication 804 indicates that the program has completed execution of the task in step 301 of Figure 3. A breakpoint 802 located before task "Check availability" or step 302 in Figure 3 has been found and it is highlighted. In this case, the highlighted breakpoint 802 is represented by a circle without shading, which is in contrast with the shaded circle representing the set breakpoint 402 in Figure 4. The task "Check availability" or step 302 in Figure 3 is not executed yet and there is a "play" button 602 in Figure 6 located adjacent to it.

When the business process of the program is suspended, a user may watch or monitor values of variables coded in the program using the GUI to verify the accuracy of the coding of the program.

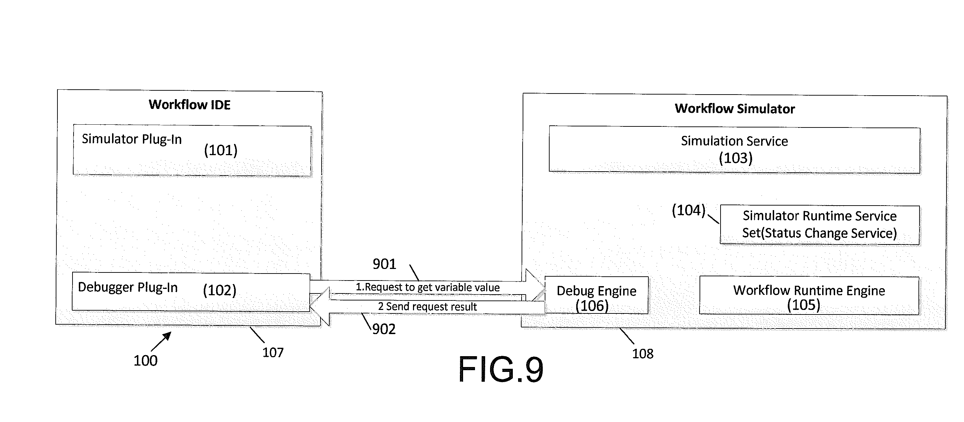

With reference to Figure 9, the debugger plug-in 102 requests the debug engine 106 to get a variable value at step 901.

At step 902, the debug engine 106 sends to the debugger plug-in 102 the value or result of the variable value being requested at step 901. Thereafter, the debugger plug-in 102 can cause the value or result of the requested variable value to be displayed in the GUI of the IDE 107. Alternatively, the debugger plug-in 102 may request the simulator plug-in 101 to display the value or result in a display.

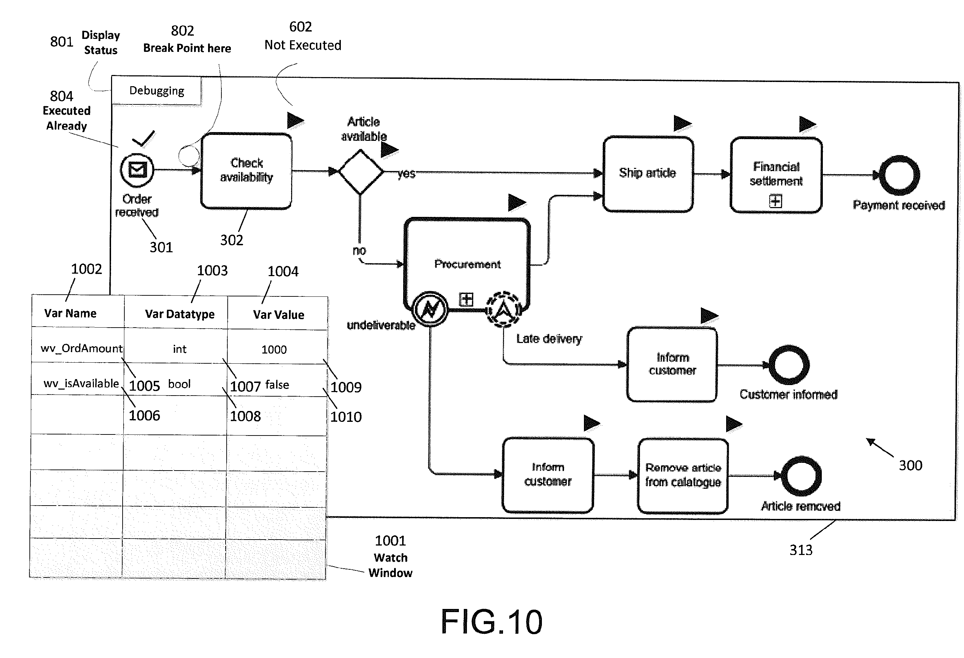

Figure 10 illustrates a watch window showing up in the screenshot in Figure 8.

The watch window 1001 can be activated either by the debugger plug-in 102 or the simulator plug-in 101 to display the value or result of requested variable values valid at the point of suspension of the business process of the program. In the watch window 1001, there are three columns for displaying namely, name of variable (Var Name) 1002, data type of the variable (Var Datatype) 1003 and value of the variable (Var Value) 1004. In this case, there are two variables, wv_OrdAmount 1005 and wv_isAvailable 1006, in the watch window 1001. The data types of the two variables are integer (int) 1007 and boolean (bool) 1008 respectively and the values of the two variables are *1000* 1009 and false 1010 respectively.

It is appreciated that there could be an activation mechanism in the GUI for resuming debugging of the program after the business process of the program has been suspended at the breakpoint 802. Once resumed, the rest of the program after the breakpoint 802 will be executed in order.

With reference to Figure 2, after step 205, debugging ends. At step 206, a check is performed to see if simulation for the business process of the program in flowchart 300 to run as if it is operating in actual application should be aborted.

If the simulation is to be aborted, for instance, when a user chooses to abort it, the simulation and debugging are terminated at step 207.

If the simulation is not to be aborted, for instance, when the program is still suspended due to a breakpoint (e.g. 802 in Figure 8), no termination of the simulation and debugging will take place. Simulation and debugging will continue in this case.

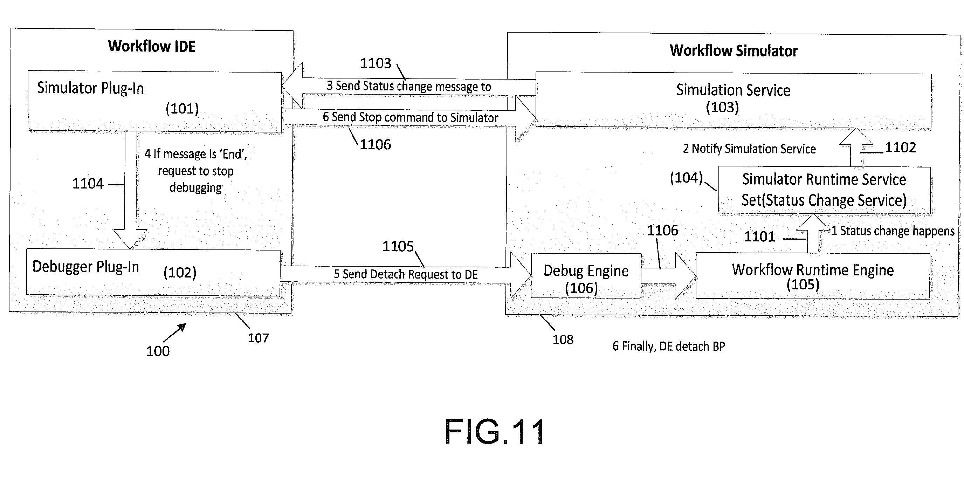

Figure 11 illustrates steps 206 and 207 in Figure 2 in more detail.

At step 1101, the program is executing in the simulated runtime environment and the Workflow runtime engine 105 is reporting continuously changes in the status of the executed program to the simulator runtime service set 104. This is similar to step 701 in Figure 7.

At step 1102, on receiving the status change report from the Workflow runtime engine 105, the simulator runtime service set 104 notifies the simulation service 103 about the status change.

At step 1103, on receiving the status change notification from the simulator runtime service set 104, the simulation service 103 sends a status change message to the simulator plug-in 101.

At step 1104, on receiving the status change message from the simulation service 103, the simulator plug-in 101 checks whether the status change message is one that is 'End', which means that the business process in the flowchart 300 of the program has completed execution.

If the message is found to be 'End', the simulator plug-in 101 will request the debugger plug-in 102 to stop the debugging of the business process (BP) of the program.

At step 1105, on receiving the request from the simulator plug-in 101, the debugger plug-in 102 sends a request to the debug engine 106 to detach the debugger plug-in 102 from the simulator 108. Communication between the debugger plug-in 102 and the debug engine 106 will cease after detaching.

At step 1106, the debug engine 106 instructs the Workflow runtime engine 105 to detach the business process of the program from the simulated runtime environment i.e. stop the program from further execution and any debugging.

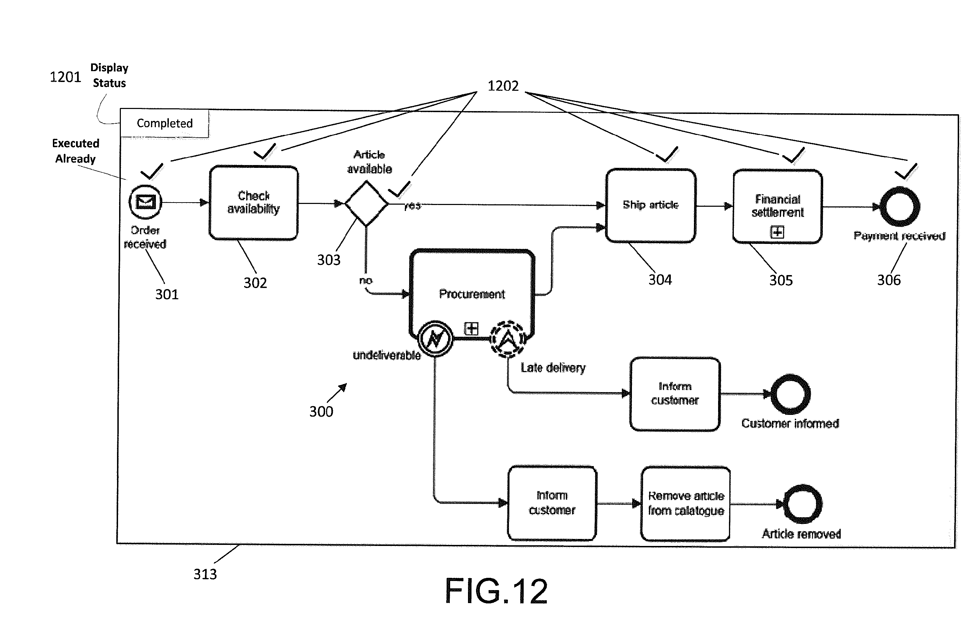

Figure 12 shows a screenshot of the canvas 313 of the GUI containing the flowchart 300 in Figure 300 after step 1106 in Figure 11 in the case where the business process in the flowchart 300 in Figure 3 of the program has completed execution.

In Figure 12, there is a status display 1201 indicating that the business process of the program has completed execution. There are "executed" indications 1202, each in the form of a "tick" and located adjacent to the graphics representing the steps 301, 302, 303, 304, 305 and 306 in Figure 3. These indications 1202 indicate that the program has completed execution of the tasks in each one of steps 301, 302, 303, 304, 305 and 306 of Figure 3.

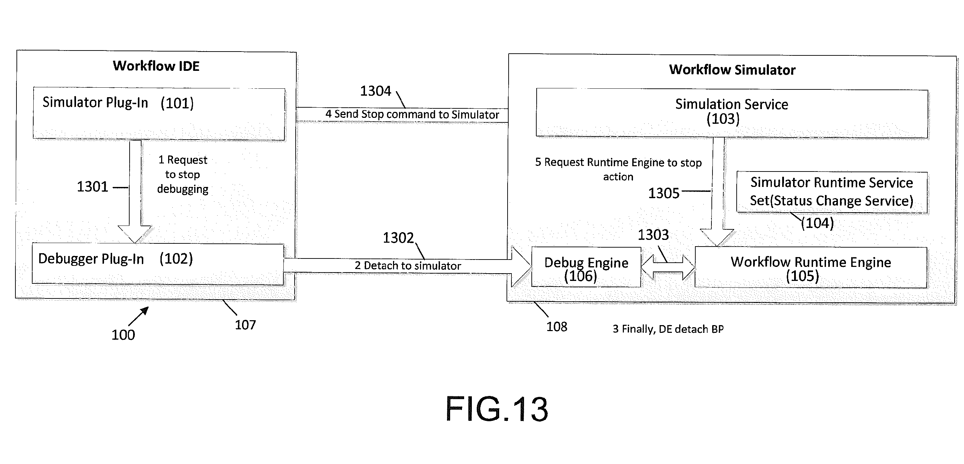

Figure 13 illustrates what happens when a user selects 'Abort' using the GUI of the IDE 107 in Figure 1. Selecting 'Abort' at any point in the execution of the program terminates the simulation and debugging immediately.

At step 1301, a user selects 'Abort' and the simulator plug-in 101 responses by requesting the debugger plug-in 102 to stop the debugging of the business process (BP) of the program.

At step 1302, on receiving the request from the simulator plug-in 101, the debugger plug-in 102 sends a request to the debug engine 106 to detach the debugger plug-in 102 from the simulator 108.

At step 1303, the debug engine 106 instructs the Workflow runtime engine 105 to detach the business process of the program from the simulated runtime environment.

At step 1304, the simulator plug-in 101 sends a stop command to the simulation service 103 to stop the simulation from further running the program of the business process represented by the flowchart 300 in Figure 3 as if it is operating in a actual application.

At step 1305, the simulation service 103 requests the Workflow runtime engine 105 to stop any further action. Thereafter, the Workflow runtime engine 105 completely terminates the simulation and the debugging of the program by ending any procedures related to the program.

The simulator plug-in 101 may be configured such that, after step 1305 has commenced, it would not cause to display in a display any indications such as the breakpoint 402 in Figure 4 or 802 in Figure 8, the status displays 601 in Figure 6, 801 in Figure 8 or 1201 in Figure 12, the "tick" indications 804 in Figure 8 or 1202 in Figure 12, and the "not executed" indication 602 in Figure 6. In this case, only a "clean" (clean as in without indications of debugging) screenshot such as Figure 3 can be displayed.

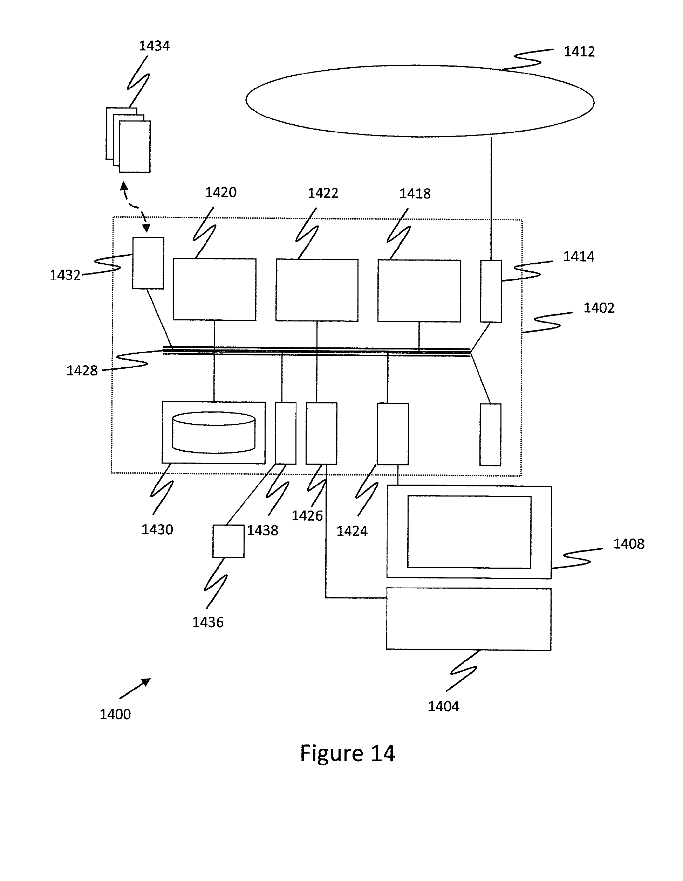

The apparatus 100 in Figure 1 may be a computer 1400, schematically shown in Figure 14. There may be provided software, such as one or more computer programs being executed within the computer 1400, and instructing the computer 1400 to run the IDE 107 in Figure 7 and the Simulator 108 in Figure 1, conduct the steps taken in Figures 2, 5, 7, 9, 11 and 13 herein described, and for displaying screenshots such as those in Figures 3, 4, 6, 8, 10 and 12.

The computer 1400 comprises a processing unit 1402 for processing the one or more computer programs, and includes input modules such as a computer mouse 1436, keyboard/keypad 1404, and/or a plurality of output devices such as a display 1408.

The processing unit 1402 may be connected to a computer network 1412 via a suitable transceiver device 1414 (i.e. a network interface), to enable access to e.g. the Internet or other network systems such as a wired Local Area Network (LAN) or Wide Area Network (WAN). The processing unit 1402 may also be connected to one or more external wireless communication enabled devices 1434 via a suitable wireless transceiver device 1432 e.g. a WiFi transceiver, Bluetooth module, Mobile telecommunication transceiver suitable for Global System for Mobile Communication (GSM), 3G, 3.5G, 4G telecommunication systems, or the like.

The processing unit 1402 in the example includes a processor 1418, a Random Access Memory (RAM) 1420 and a Read Only Memory (ROM) 1422. The processing unit 1402 also includes a number of Input/Output (I/O) interfaces, for example I/O interface 1438 to the computer mouse 1436, I/O interface 1424 to the display 1408, and I/O interface 1426 to the keyboard 1104.

The components of the processing unit 1402 typically communicate via an interconnected bus 1428 and in a manner known to the person skilled in the relevant art.

The computer programs may further include one or more software applications for e.g. instant messaging platform, audio/video playback, internet accessibility, operating the computer 1400 (i.e. operating system), network security, file accessibility, database management, which are applications typically equipped on a desktop or portable computer. The computer programs may be supplied to the user of the computer system 1400 encoded on a data storage medium such as a CD-ROM, on a flash memory carrier or a Hard Disk Drive, and are to be read using a corresponding data storage medium drive of a data storage device 1430. Such application programs may also be downloaded from the computer network 1412. The application programs are read and controlled in its execution by the processor 1418. Intermediate storage of program data may be accomplished using RAM 1420.

Furthermore, one or more of the steps of the computer programs may be performed in parallel rather than sequentially. One or more of the computer programs may be stored on any computer readable medium. The computer readable medium may include storage devices such as magnetic or optical disks, memory chips, or other storage devices suitable for interfacing with a general purpose computer. The computer readable medium may also include a hard-wired medium such as exemplified in the Internet system, or wireless medium such as exemplified in the Wireless LAN (WLAN) system. The computer program when loaded and executed on such a general-purpose computer effectively results in an apparatus that implements the steps of the computing methods in examples herein described.

Many modifications and other examples can be made to the method and apparatus for debugging a program of a business process by those skilled in the art having the understanding of the above described disclosure together with the drawings. Therefore, it is to be understood that the method and apparatus for debugging a program of a business process is not to be limited to the above description contained herein only, and that possible modifications are to be included in the claims of the disclosure.

## Claims

1. A method for debugging a program of a business process, the method comprising:
displaying a flowchart (300) of the business process on a display (1408),
**characterized in that** said displaying of the flowchart (300) being enabled by one or more plug-ins (101, 102) executable by a processing unit (1402), the method further comprising:
setting a debugging breakpoint in the displayed flowchart (300);
operating a simulator (108) executable by a processing unit (1402) for simulating a runtime environment for executing the program;
communicating status of the program by the one or more plug-ins (101, 102) with the simulator (108);
determining whether the status of the program has reached the set debugging breakpoint by the one or more plug-ins (101, 102) ; and
when it is determined that the status of the program has reached the set debugging breakpoint, stopping the program by the one or more plug-ins (101, 102), in order to debug the program of the business process.

2. The method as claimed in claim 1, the method further comprising:
displaying a breakpoint indicator on the display (1408) for indicating location of the set debugging breakpoint, and/or displaying a status indicator on the display (1408) for indicating the status of the program, and/or displaying an indicator on the display (1408) for indicating that a task or activity in the process of the program is not executing, and/or displaying an indicator on the display (1408) for indicating that the program has stopped, and/or displaying a watch window (1001) on the display (1408) for indicating variable values of the program during debugging.

3. The method as claimed in claim 1, wherein the displayed flowchart (300) is represented based on Business Process Modeling Notation standards, and/or wherein the displayed flowchart (300) is created based on Business Process Execution Language standards.

4. The method as claimed in claim 1, wherein the program is executed under Microsoft Workflow runtime environment.

5. The method as claimed in claim 1, wherein the step of stopping the program when the status of the program has reached the set debugging breakpoint is performed by a debug engine (106) for Microsoft Workflow.

6. An apparatus for debugging a program of a business process, the apparatus comprising:
a processing unit (1402); and
a display (1408) for displaying a flowchart (300) of the business process,
**characterized in that** the apparatus further comprising:
a simulator (108) executable by the processing unit (1402) for simulating runtime environment for executing the program; and
one or more plug-ins (101, 102) for enabling the displaying of the flowchart (300), and
the processing unit (1402) being configured for
setting a debugging breakpoint in the displayed flowchart (300);
communicating status of the program by the one or more plug-ins (101, 102) with the simulator (108);
determining at the one or more plug-ins (101, 102) whether the status of the program has reached the set debugging breakpoint; and
stopping the program when the one or more plug-ins (101, 102) determines that the status of the program has reached the set debugging breakpoint, in order to debug the program of the business process.

7. The apparatus as claimed in claim 1, the processing unit (1402) is further configured for displaying a breakpoint indicator (402, 802) on the display (1408) for indicating location of the set debugging breakpoint, and/or further configured for displaying a status indicator (601, 801, 1201) on the display (1408) for indicating the status of the program, and/or further configured for displaying an indicator (602) on the display (1408) for indicating that a task or activity (302) in the process of the program is not executing, and/or further configured for displaying an indicator (1201) on the display (1408) for indicating that the program has stopped.

8. The apparatus as claimed in any one of the preceding claims, the processing unit (1402) is further configured for displaying a watch window (1001) on the display (1408) for indicating variable values (1009, 1010) of the program during debugging.

9. The apparatus as claimed in any one of the preceding claims, the displayed flowchart (300) is represented based on Business Process Modeling Notation standards.

10. The apparatus as claimed in any one of the preceding claims, wherein the displayed flowchart (300) is created based on Business Process Execution Language standards.

11. The apparatus as claimed in any one of the preceding claims, wherein the program is executed under Microsoft Workflow runtime environment.

12. The apparatus as claimed in any one of the preceding claims, further comprises a debug engine (106) for Microsoft Workflow is used to perform the step of stopping the program when the status of the program has reached the set debugging breakpoint.

13. The apparatus as claimed in any one of the preceding claims, the simulator (108) further comprises a debug engine (106) for suspending or terminating the program executed under the simulated runtime environment, wherein
one of the plug-ins is a debugger plug-in (102) and the other is a simulator plug-in (101), the debugger plug-in (101) is for communicating with the simulator plug-in (101) to instruct the debug engine (106) to suspend or terminate the program.

14. The apparatus as claimed in claim 13, wherein the simulator (108) further comprises a runtime engine (105) for providing status of the program to the debug engine (106) and the debug engine (106) in turn provides the status of the program to the simulator plug-in (101) enabling said displaying though the debugger plug-in (102).

15. The apparatus as claimed in claim 13 or 14, wherein the debugger plug-in (102) is configured for determining whether the status of the executing program has reached the set debugging breakpoint, and/or the simulator plug-in (101) enabling said displaying is configured for determining whether the status of the executing program has reached the set debugging breakpoint.
